# EUROPÄISCHE PATENTSCHRIFT

(11) **EP 1 010 619 B1**
(45) Veröffentlichungstag und Bekanntmachung des Hinweises auf die Patenterteilung: **01.08.2001**
(21) Anmeldenummer: 99122919.6
(22) Anmeldetag: 18.11.1999
(51) Int. Cl.: B65B 7/02

(54) **Füllmaschine zum Füllen von Ventilsäcken**
Filling machine for filling valve bags
Machine de remplissage pour remplir des sacs à valve

(30) Priorität: 14.12.1998 DE 19857476
(43) Veröffentlichungstag der Anmeldung: 21.06.2000
(73) Patentinhaber: FIRMA HAVER & BOECKER, D-59302 Oelde (DE)
(72) Erfinder: Combrink, Alois, 59302 Oelde (DE); Vollenkemper, Willi, 59302 Oelde (DE); Pagenkemper, Bernhard, 33378 Rheda-Wiedenbrück (DE)
(74) Vertreter: Stracke, Alexander, Dipl.-Ing.

(56) Entgegenhaltungen:
- DE-A- 2 932 726
- DE-A- 3 613 244
- DE-C- 4 219 785

## Beschreibung

Die Erfindung bezieht sich auf eine Füllmaschine zum Füllen von Ventilsäcken, die mit einen mittels eines Drehantriebes mit konstanter Drehzahl rotierend antreibbaren Rotor ausgerüstet ist, der mit mehreren Füllrohren bestückt ist, auf die die zu füllenden Ventilsäcke vorzugsweise mittels eines Aufsteckers aufsteckbar sind und die sich nach dem Aufstecken bis zum Abwurf auf einen Abförderer auf am Rotor angebrachte Sackstühle abstützen. Eine derartige Füllmaschine ist aus der DE 36 13 244 A1 bekannt.

In der Branche wird die in Rede stehende Füllmaschine als rotierende Füllmaschine bezeichnet. Gegenüber den stationären Reihenpackanlagen mit mehreren Füllstationen ergeben sich außer der vergleichsweise höheren Leistung noch die Vorteile, daß nur ein einfacher, ortsfester Aufstecker installiert werden muß und die Abwurfstelle für die gefüllten Ventilsäcke stets gleichbleibend ist. Der kritische Punkt bei einer rotierenden Füllmaschine ist jedoch der Sackabwurf.

Bei den bisher bekannten Anlagen werden die gefüllten Ventilsäcke beim Abwurf durch Stöße erheblich belastet, so daß aus dem noch offenen Ventil Füllgut austritt. Da es unvermeidbar ist, daß aus dem offenen Ventil Füllgut austritt, ergibt sich zwangsläufig eine Verschmutzung der Ventilsäcke und ein Produktverlust, der sich als Gewichtsabweichung auswirkt. Außerdem werden die Innenflächen des Ventils verschmutzt, so daß nach dem Abwurf das Ventil nicht mehr zufriedenstellend abgedichtet werden kann. Daraus resultiert ferner, daß bei jedem weiteren, unvermeidlichen Stoß während des Abtransportes des Ventilsackes aus dem Ventil Produkt rieselt, so daß es nicht nur zur Verschmutzung des Ventilsackes sondern auch zur Verschmutzung der Transporteinrichtung kommt. Dies hat zur Folge, daß eine Packanlage an vielen Stellen mit Staub belastet wird und die nachgeschalteten Aggregate einem höheren Verschleiß ausgesetzt sind. Die zuvor genannten Umstände werden in der Branche äußerst unangenehm und nachteilig angesehen.

Um den Produktverlust beim Abwurf des Sackes zu erfassen, wird üblicherweise in der Abtransporteinrichtung für die gefüllten Ventilsäcke eine Gewichtskorrekturwaage installiert, die daß tatsächliche Sackgewicht erst nach dem Abwurf erfaßt, so daß die bis dahin aufgetretenen Verluste ausgewertet werden. Durch eine solche Anlage wurde eine wesentliche Verbesserung erzielt, allerdings können nicht alle durch den Abwurf bedingten Nachteile,kompensiert werden. Aufgrund des problematischen Sackabwurfes war es bislang deshalb notwendig, den Packmaschinen erhebliche Einrichtungen oder Geräte nachzuschalten, wie beispielsweise die erwähnte Gewichtskorrekturwaage, eine Sackreinigungseinrichtung, sowie Aggregate, um fehlgewichtige Säcke auszuschleusen und automatisch zu zerschneiden. Dadurch sind wiederum Auffangeinrichtungen für das sogenannte Rückmehl in größeren Umfange erforderlich. Es sind deshalb bereits Versuche unternommen worden, um die Ventile von Ventilsäcken, die mittels einer rotierenden Füllmaschine mit konstanter Drehzahl gefüllt wurden auf dem Abtransportweg, d. h. nach dem Abwurf zu verschließen. Die Ergebnisse waren jedoch nicht zufriedenstellen, da die Ventile stark verschmutzt und deformiert waren. Die Verschmutzungen der Ventilsäcke und der Packanlage konnten demzufolge nicht ausreichend reduziert werden. Außerdem wurde die geforderte Gewichtsgenauigkeit nicht erreicht.

Prinzipiell wäre es möglich, jedem Füllrohr einer mit konstanter Drehzahl angetriebenen rotierenden Füllmaschine eine Ventilverschließeinrichtung zuzuordnen. Die Ventile könnten dann vor dem Abwurf verschlossen werden. Der dadurch bedingte maschinelle Aufwand ist jedoch beträchtlich.

Aus diesem Grunde wurde eine zunächst zufriedenstellende Lösung gefunden, in dem die rotierende Füllmaschine im Takt angetrieben wurde. Dazu ist der Drehantrieb ein entsprechend der Anzahl der Füllrohre intermittierend getakteter Antrieb. Dadurch ist es möglich, daß die gefüllten Ventilsäcke stoßfrei im Stillstand des Rotors von den Füllrohren abgenommen werden können, so daß vor dem Auftreten von stoßartigen Belastungen die Ventile geschlossen werden können. Außerdem ist es möglich, daß aus den Füllrohren nachrieselnde Füllgut gezielt abzuleiten.

Ausgehend von einer Füllmaschine mit einem mit konstanter Drehzahl antreibbaren Rotor liegt der Erfindung die Aufgabe zugrunde, eine solche Füllmaschine so zu gestalten, daß ohne Leistungsminderung mit einem konstruktiv zu vertretenden Aufwand die Ventile der gefüllten Ventilsäcke mittels einer an sich bekannten Ventilverschließeinrichtung verschlossen werden können.

Die gestellte Aufgabe wird durch wenigstens eine außerhalb des Rotors auf einer konzentrisch dazu verlaufenden Bahn bewegbaren Ventilverschließeinrichtung gelöst, die zum Verschließen des Ventils des gefüllten und vom Füllrohr abgenommenen Ventilsackes zumindest über einen bestimmten Winkelbereich synchron mit dem Rotor bewegbar ist.

Das Verschließen der Ventile der gefüllten Ventilsäcke erfolgt nunmehr, bevor der Sack auf dem Abförderer abgeworfen wird und noch während der Drehung. Das Verschließen kann mit einer bereits bekannten Verschließeinrichtung erfolgen, wobei die Bahn so gestaltet werden muß, daß sie mittels eines Antriebes mit gleicher Geschwindigkeit wie der Rotor bewegt wird. Ferner besteht der Vorteil, daß die gefüllten Ventilsäcke schonend von den Füllrohren abgenommen werden können, so daß kein Füllgut durch die Ventile nach außen gelangt, wodurch die Ventilinnenflächen verschmutzt würden. Ferner kann die rotierende Füllmaschine mit den Leistungen betrieben werden, wie eine rotierende Füllmaschine ohne Verschließeinrichtung. Außerdem ist kein zusätzlicher Platzbedarf notwendig, so daß es möglich ist, vorhandene Anlagen nachzurüsten. Der besagte Winkelbereich, über den die Verschließeinrichtung mit der Geschwindigkeit des Rotors bewegt wird, liegt unmittelbar vor dem Abförderer bzw. dem Austrageband.

Es gibt mehrere Möglichkeiten, die Ventilverschließeinrichtung zum Zwecke des Verschließens der Ventile längs der vorgegebenen Bahn zu führen. Gemäß einem ersten Vorschlag ist vorgesehen, daß die Führung am stationären Teil der Füllmaschine angeordnet ist und sich über einen vorgegebenen Winkel erstreckt, und daß die Ventilverschließeinrichtung in und entgegen der Drehrichtung des Rotors bewegbar ist. Gemäß einem zweiten Vorschlag ist vorgesehen, daß die Führung fest und mitlaufend am Rotor angeordnet ist, und daß die Ventilverschließeinrichtung ebenfalls in und entgegen der Drehrichtung des Rotors bewegbar ist. Bei beiden Ausführungen wird der konstruktive Aufwand gering gehalten. Der Antrieb für die Verschließeinrichtung könnte beispielsweise derart ausgelegt sein, daß die Bewegung der Verschließeinrichtung entgegen der Drehrichtung des Rotors mit einer gegenüber der Geschwindigkeit des Rotors erhöhten Geschwindigkeit erfolgt. Dadurch wird die Zeit für das Rückführung der Ventilverschließeinrichtung in die Ausgangsstellung erhöht, so daß eine ausreichende Strecke für das Verschließen des jeweiligen Ventils zur Verfügung steht. Dieser Antrieb ist besonders dann vorteilhaft, wenn in der üblichen Auslegung die rotierende Füllmaschine mit einer Ventilverschließeinrichtung ausgestattet ist.

Damit die Ventile der gefüllten Ventilsäcke exakt verschlossen werden, ist es notwendig, daß die zu verschließenden Ventile stets in der gleichen Position zu der Verschließeinrichtung stehen. Dazu ist vorgesehen, daß jedem Füllrohr ein Positioniertaster, vorzugsweise ein berührungslos arbeitender Taster zur Positionierung des vom Füllrohr abgenommenen Sackes vor dem Verschließen des Ventils zugeordnet ist. Als Taster kommen die allgemein bekannten Lichtschranken besonders in Frage. Jedem Füllrohr ist eine Abschiebe- oder Abzieheinrichtung zugeordnet, um die gefüllten Ventilsäcke schonend vom Füllrohr abzunehmen. Diese Abschiebe- oder Abzieheinrichtung ist zweckmäßigerweise so ausgestaltet, daß die Höhenlage des Sackes sich nicht ändert oder nur unwesentlich ändert. Es ist dann zweckmäßig, wenn jede Ventilverschließeinrichtung an einem gesteuert absenkbaren und anhebbaren Gestänge aufgehängt ist, und daß das Gestänge an einem in der Führung bewegbaren Laufwagen angelenkt ist. Zum Verschließen der Ventile wird dann die Ventilverschließeinrichtung abgesenkt und danach wieder angehoben und in die Ausgangslage zurückgefahren, um das Ventil des nächstfolgenden Ventilsackes zu verschließen. Der Laufwagen bietet den Vorteil, daß die Reibkräfte minimal sind. Eine konstruktiv einfache Gestaltung ergibt sich, wenn das gesteuert absenkbare und anhebbare Gestänge aus wenigstens zwei parallelen Führungslenkern besteht, die mittels eines Stelltriebes schwenkbar sind. Der Stelltrieb kann verschiedenartig gestaltet sein. Zweckmäßigerweise ist der jedoch als ein am Laufwagen angeordneter Kurbelantrieb ausgebildet, dessen Kurbelstange an einem der Führungslenker angelenkt ist. Dadurch wird die obere und untere Stellung der Verschließeinrichtung exakt vorgegeben. Als Antrieb für die Kurbel könnte beispielsweise ein Stellmotor in Form eines Servomotors verwendet werden. Eine einfache konstruktive Ausführung für die Hin- und Herbewegung der Ventilverschließeinrichtung wird erreicht, in dem am Laufwagen eine Zahnstange befestigt ist, die mit einem von einem Motor antreibbaren Ritzel in Eingriff steht. Der Motor müßte dann in seiner Drehrichtung umkehrbar sein. Eine besonders einfache Führung ergibt sich, wenn diese aus konzentrisch zum Rotor in unterschiedlichen Abständen und höhengleich angeordneten Profilschienen gebildet ist. Die Ventilverschließeinrichtung arbeitet bevorzugt nach dem Ultraschallverfahren. Die elektrische Steuerung für die Ventilverschließeinrichtung einschließlich seiner Antriebsaggregate wird nicht näher beschrieben, da allgemein bekannte Steuerungselemente verwendet werden.

Anhand der beiliegenden Zeichnung wird die Erfindung noch näher erläutert. Es zeigen:
- Fig. 1: eine rotierende Füllmaschine in einer Draufsicht, bei der die Führung für die Ventilverschließeinrichtung am ortsfesten Teil der Füllmaschine angeordnet ist, rein schematisch,
- Fig. 2: eine der Figur 1 entsprechende Draufsicht, bei der jedoch die Führung am Rotor der Füllmaschine angeordnet ist,
- Fig. 3: die am ortsfesten Teil der Füllmaschine angeordnete Ventilverschließeinrichtung in der Außerbetriebsstellung bei der der zu füllende oder gefüllte Sack noch am Füllrohr hängt,
- Fig. 4-7: vier verschiedene Phasen zum Verschließen des Ventils bei einer Anordnungsgemäß den Figuren 1-3 und
- Fig. 8-12: vier verschiedene Phasen zumVerschließen des Ventils bei einer Anordnung gemäß der Figur 2.

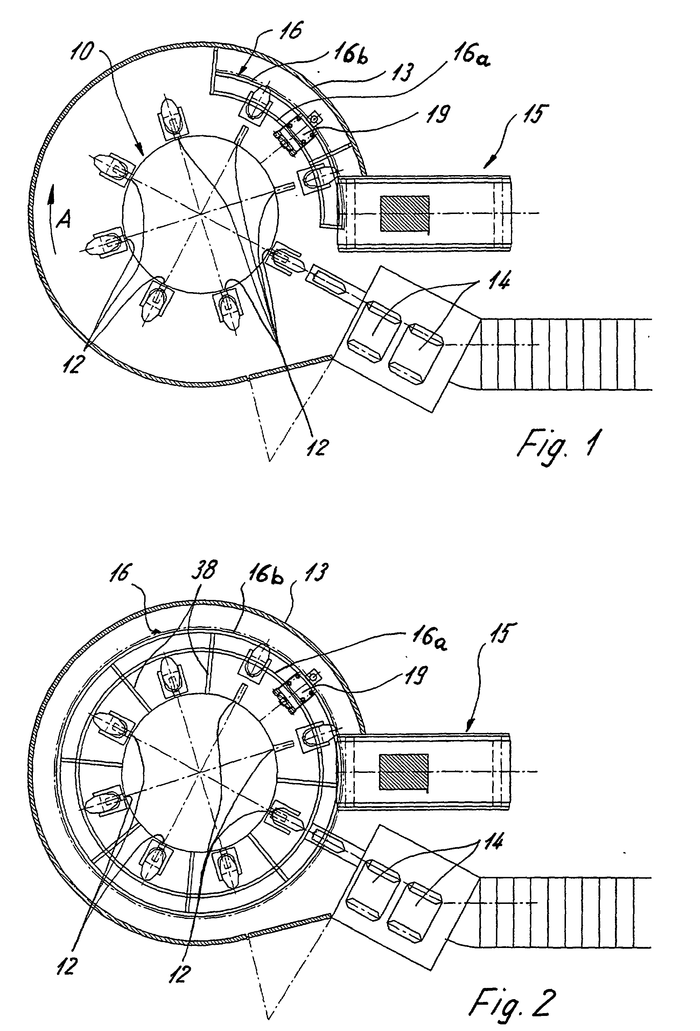

Die in den Figuren 1 und 2 rein schematisch dargestellte rotierende Füllmaschine 10 ist im dargestellten Ausführungsbeispiel mit einem Rotor 11 ausgestattet, der mit 8 Füllrohren 12 bestückt ist. Die eigentliche rotierende Füllmaschine 10 ist von einem stationären Teil 13 umgeben, welches im wesentlichen konzentrisch zum Rotor 11 verläuft. Die Umhüllung beträgt ca. 270 Grad, so daß Raum für das Zuführen der zu füllenden Ventilsäcke 14 mittels eines nicht näher dargestellten Aufsteckers und eines ebenfalls nicht näher dargestellten Abförderers 15 für die gefüllten Ventilsäcke verbleibt. Der Antrieb für den Rotor mit konstanter Drehzahl ist nicht dargestellt. Die Anzahl der Füllrohre kann größer oder kleiner sein als in den Figuren dargestellt.

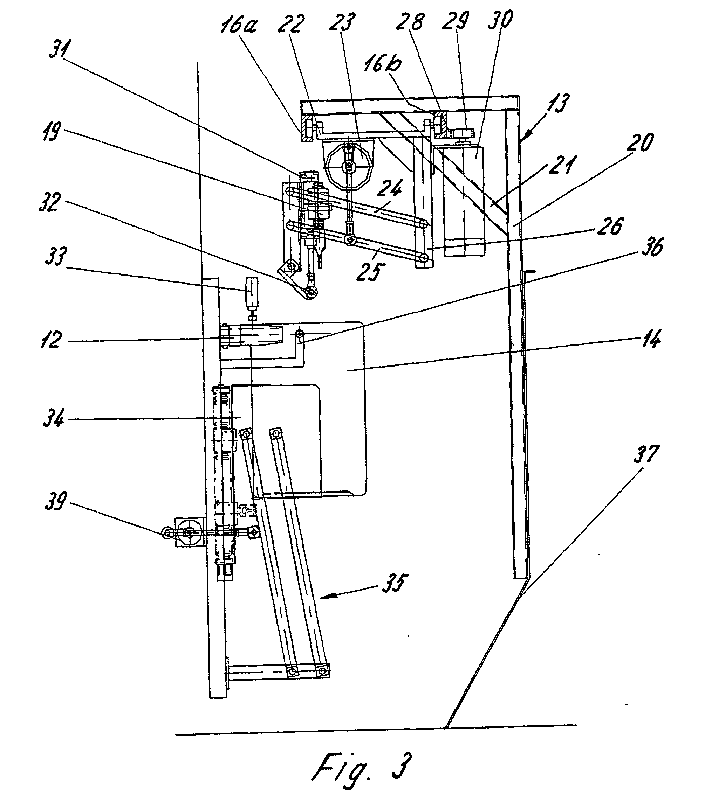

Bei der Ausführung nach der Figur 1 ist am stationären Teil 13 der Füllmaschine eine anhand der Figur 3 noch näher erläuterte Führung 16 angeordnet, die sich über einen Winkel von ca. 90 Grad außerhalb des Rotors 11 erstreckt. Diese Führung 16 besteht im wesentlichen aus zwei im Querschnitt u-förmigen Profilchienen 16a, 16b deren offene Seiten einander zugewandt liegen. Die Profilschienen 16a, 16b verlaufen konzentrisch zum Rotor 11 in unterschiedlichen, jedoch gleichbleibenden Abständen. In der Führung 16 ist eine nicht näher erläuterte Ventilverschließeinrichtung 19 hin und her bewegbar geführt. Diese Ventilverschließeinrichtung 19 arbeitet in vorteilhafter Weise nach dem Ultraschallverfahren. Bei dieser Ausführung liegt die Führung 16 in Drehrichtung A des Rotors 11 direkt vor dem Abförderer 15. Bei der Ausführung nach der Figur 2 erstreckt sich die Führung 16 umlaufend um den Rotor 11 herum. Die Anordnung des Aussteckers für die Ventilsäcke 14 und für den Abförderer 15 ist identisch zu der Ausführung nach der Figur 1. Die Ventilverschließeinrichtung 19 wird über den gleichen Winkel innerhalb der Führung 16 bewegt. Diese ist bei der Ausführung nach der Figur 2 fest mit dem Rotor 11 verbunden.

Die Figur 3 zeigt, daß der stationäre Teil 13 der rotierenden Füllmaschine 10 aus einer winkelförmigen Abstützung 20 besteht, die durch Schrägstreben 21 verstärkt ist. An den oberen horizontalen Holm sind zwei konzentrisch zum Rotor 11 verlaufende Profilschienen 16 a und 16 b angesetzt. Die Profilschienen 16 a und 16 b sind im Querschnitt u-förmig ausgebildet, und so an den oberen horizontal Holm an dessen untere Seite angesetzt, daß die offenen Seiten einander zugewandt liegen. In den Profilschienen 16 a und 16 b sind die Rollen eines Laufwagens 22 verschiebbar geführt. An dem Laufwagen ist an der unteren, den Füllrohren 12 der rotierenden Füllmaschine 10 zugewandten Seite ein Kurbeltrieb 23 so angesetzt, daß die Kurbel um eine horizontale Achse dreht. Der Antrieb der Kurbel erfolgt in nicht näher dargestellter Weise über einen Motor. Die Ventilverschließeinrichtung 19 ist an zwei unterhalb und im Abstand zum Laufwagen 22 liegenden Führungslenkern 24, 25 aufgehängt. Die beiden Führungslenker 24, 25 stehen im Abstand übereinander und sind mit ihren der Ventilverschließeinrichtung 19 abgewandten Enden an einem Ausleger 26 schwenkbar gelagert, der am Laufwagen 22 senkrecht stehend festgelegt ist. Die Kurbelstange als Antriebsglied des Kurbeltriebes 23 ist im dargestellten Ausführungsbeispiel an dem unteren Führungslenker 25 angelenkt. An der äußeren Profilschiene 16 b ist an der der Ventilverschließeinrichtung 19 abgewandten Seite eine Zahnstange 28 angesetzt, die mit einem Ritzel 29 in Eingriff steht. Das Ritzel 29 ist auf den Abtriebszapfen eines Servomotors 30 drehfest aufgesetzt. Der Servomotor 30 ist an dem Laufwagen 22 aufgehängt. Die Ventilverschließeinrichtung 19 ist noch mit einer Kolbenzylindereinheit 31 ausgestattet, um zum Verschließen der Ventile ein Widerlager 32 für die Schweißbacke der Ventilverschließeinrichtung 19 zu bewegen.

Jedem Füllrohr 12 ist ein Sackhalterzylinder 33 zugeordnet, um den jeweils zu füllenden Ventilsack 14 am Füllrohr 12 festzulegen. Die aufgesteckten und zu füllenden Ventilsäcke 14 stützen sich mit dem unteren Boden auf den Füllrohren 12 funktionell zugeordnete Sackstühle 34 ab. Jeder Sackstuhl 34 ist an einem allgemein bekannten Führungsgestänge 35 aufgehängt, welches von einem Kurbeltrieb 39 um horizontale Achsen verschwenkbar ist, damit der gefüllte Ventilsack 14 vom Füllrohr bis in eine vorbestimmte Position verfahren werden kann, damit mittels der Ventilsverschließeinrichtung 19 die Ventile verschlossen werden können. Die Steuerung des Kurbeltriebes 39 erfolgt durch einen berührungslosen Taster 36, der jedem Füllrohr 12 bzw. jedem Kurbeltrieb 39 zugeordnet ist. Jeder berührungslose Taster 36 ist an einem Halter angeordnet, der am Rotor 11 der rotierenden Füllmaschine befestigt ist. Als berührungsloser Taster kommt bevorzugt eine nach dem Helldunkelprinzip arbeitende Lichtschranke in Frage. Die rotierende Füllmaschine 10 ist aus Sicherheitsgründen noch mit einer Verkleidung 37 umgeben.

Bei der Ausführung nach der Figur 2 und den Figuren 8 - 11 ist die Führung 16 umlaufend am Rotor 11 angeordnet. Dazu sind daran mehrere Arme 38 angeordnet, an denen die Profilschienen 16 a und 16 b befestigt sind. Die Ventilverschließeinrichtung 19 ist jedoch in gleicherweise wie bei der Ausführung nach der Figur 1 und den Figuren 3 - 7 am Laufwagen 22 befestigt. Die Ventilverschließeinrichtung wird wiederum mittels des Servomotors 30 in und entgegen der Umlaufrichtung des Rotors 11 verfahren.

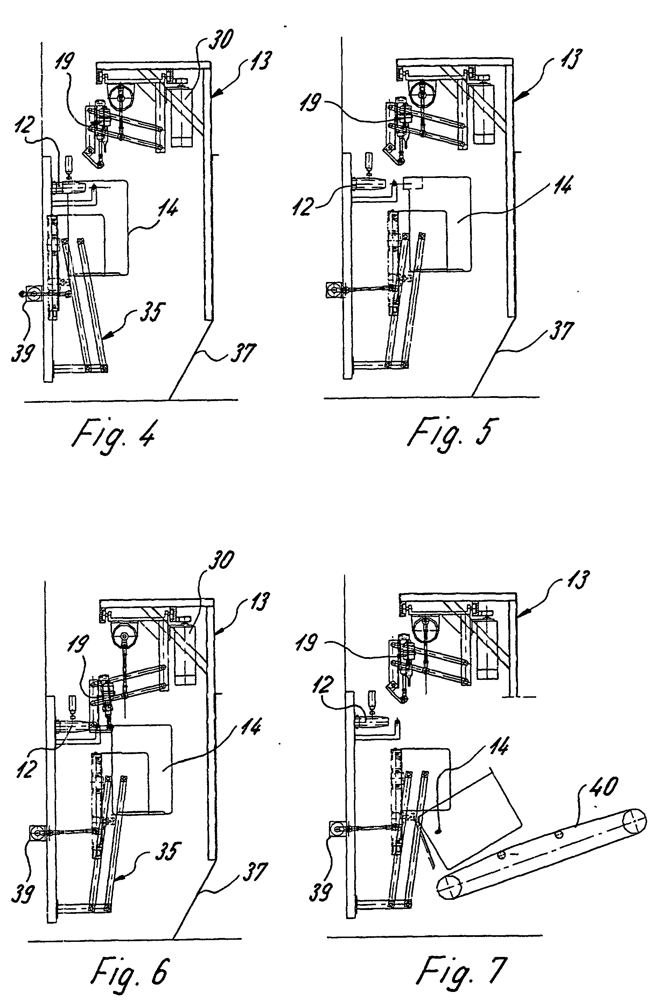

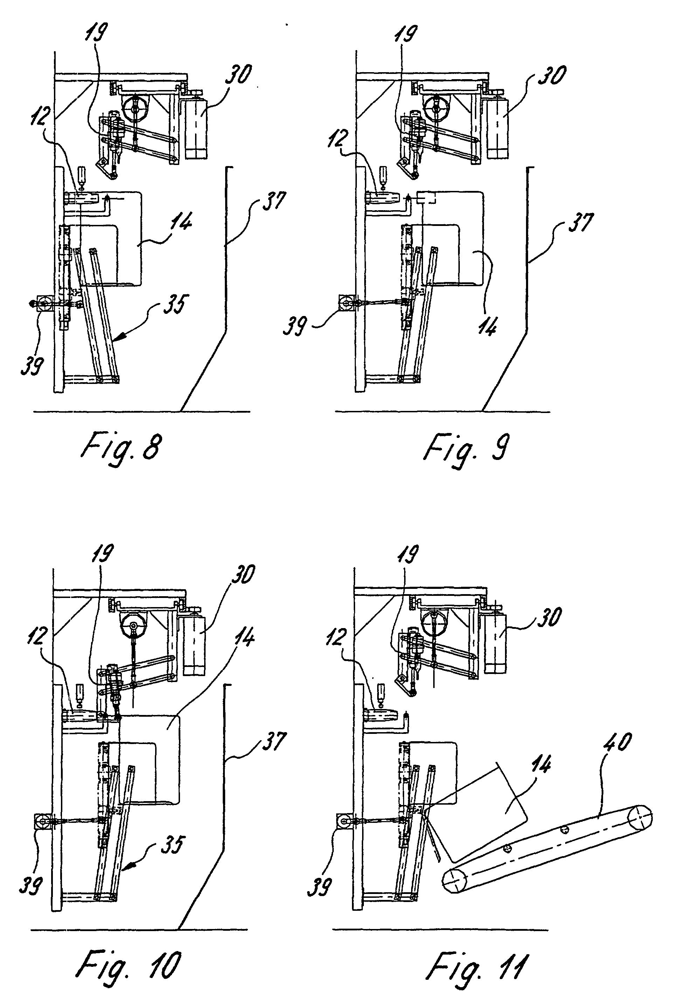

Die Figuren 4 - 7 zeigen die einzelnen Schritte zum Verschließen eines Ventils bei einer rotierenden Füllmaschine 10 gemäß der Figur 1, die Figuren 8-11 zeigen die gleichen Schritte bei einer rotierenden Füllmaschine gemäß der Ausführung nach der Figur 2. Die Figuren 4 und 8 zeigen, daß der gefüllte Ventilsack 14 noch am Füllrohr 12 hängt. Zunächst wird dann der Kurbeltrieb 39 über die Steuerung der Füllmaschine 10 eingeschaltet. Dadurch wird der gefüllte Ventilsack 14 schonend vom Füllrohr 12 abgenommen, wie die Figuren 5 und 9 zeigen. Die genau Position des Ventils bzw. die genaue Position des Ventilsackes 14 wird durch die Lichtschranke 36 gesteuert. Zunächst wird der Lichtstrahl durch den Ventilsack 14 unterbrochen, so daß auf dem Reflektor kein Lichtstrahl fällt. Sobald der Ventilsack eine bestimmte Position erreicht hat, trifft der Lichtstrahl auf den Reflektor, wodurch der Kurbeltrieb 39 gesteuert wird. Wie die Figuren 5 und 9 zeigen, steht das Ventil des Ventilsackes 14 gegenüber der zugehörigen schmaleren Kante ein klein wenig vor, wodurch das Verschließen begünstigt wird. Anschließend wird die Ventilverschließeinrichtung 19 durch den Kurbeltrieb 23 entsprechend den Figuren 6 und 10 abgesenkt. Gleichzeitig wird durch die Kolbenzylindereinheit 31 das Widerlager 32 von der schräg nach unten gerichteten Stellung in eine horizontal Stellung geschwenkt, damit ein Widerlager für die Schweißbacke der Ventilverschließeinrichtung 19 geschaffen wird. Sobald das Ventil verschlossen ist, wird das Widerlager in die Ausgangsstellung zurückgeschwenkt und die Ventilverschließeinrichtung 19 entsprechend den Figuren 7 und 11 angehoben, wobei gleichzeitig in an sich bekannter Weise der Ventilsack 14 durch Schwenken der unteren Abstützung auf ein schrägstehendes Abtransportband 40 abgeworfen wird. Der Servomotor 13 ist ein drehrichtungsumkehrbarer Motor der so geschaltet wird, daß beim Verschließen des Ventils die Ventilverschließeinrichtung 19 synchron mit dem Rotor 11 bewegt wird, d. h. die Winkelgeschwindigkeiten sind gleich. Nach dem Verschließen wird der Servomotor 30 umgesteuert, so daß die Ventilverschließeinrichtung 19 in die ursprüngliche Lage zurückgefahren wird. Die Figur 1 zeigt, daß bei dieser Ausführung die Führung 16 sich über einen Winkel von ca. 90 Grad erstreckt.

## Patentansprüche

1. Füllmaschine zum Füllen von Ventilsäcken, die mit einem mittels eines Drehantriebes mit konstanter Drehzahl rotierend antreibbaren Rotor (11) ausgerüstet ist, der mit mehreren Füllrohren (12) bestückt ist, auf die die zu füllenden Ventilsäcke (14) vorzugsweise mittels eines Aufsteckers aufsteckbar sind und die sich nach dem Aufstecken bis zum Abwurf auf einen Abförderer (15) auf am Rotor (11) angebrachte Sackstühle (34) abstützen, **gekennzeichnet durch** wenigstens eine außerhalb des Rotors (11) auf einer konzentrisch zum Rotor (11) verlaufenden Führung (16) bewegbaren Ventilverschließeinrichtung (19), die zum Verschließen des Ventils des gefüllten und vom Füllrohr (12) abgenommenen Ventilsackes (14) zumindest über einen bestimmten Winkelbereich synchron mit dem Rotor (11) bewegbar ist.

2. Rotierende Füllmaschine nach Anspruch 1, **dadurch gekennzeichnet, daß** die Führung (16) am stationären Teil der rotierenden Füllmaschine (10) angeordnet ist und sich über einen vorgegebenen Winkel erstreckt, und daß die Ventilverschlußeinrichtung (19) in und entgegen der Drehrichtung des Rotors (11) bewegbar ist.

3. Rotierende Füllmaschine nach Anspruch 1, **dadurch gekennzeichnet, daß** die Führung (16) fest und mitlaufend am Rotor (11) angeordnet ist, und daß die Ventilverschließeinrichtung (19) in und entgegen der Drehrichtung des Rotors (11) bewegbar ist.

4. Rotierende Füllmaschine nach einem oder mehreren der vorhergehenden Ansprüche 1 - 3, **dadurch gekennzeichnet, daß** der Antrieb für die Verschließeinrichtung (19) derart ausgelegt ist, daß die Geschwindigkeit der Bewegung entgegen der Drehrichtung des Rotors (11) gegenüber der Geschwindigkeit in Laufrichtung des Rotors (11) erhöht ist.

5. Rotierende Füllmaschine nach einem oder mehreren der vorhergehenden Ansprüche 1 - 4, **dadurch gekennzeichnet, daß** jedem Füllrohr (12) ein Taster (36), vorzugsweise ein berührungslos arbeitender Taster zur Positionierung des vom Füllrohr (12) abgenommen Ventilsackes (14) vor dem Verschließen seines Ventils zugeordnet ist.

6. Rotierende Füllmaschine nach einem oder mehreren der vorhergehenden Ansprüche 1 - 5, **dadurch gekennzeichnet, daß** jede Ventilverschließeinrichtung (19) an einem gesteuert absenkbaren und anhebbaren Gestänge aufgehängt ist, und daß das Gestänge an einem in der Führung (16) bewegbaren Laufwagen (22) angelenkt ist.

7. Rotierende Füllmaschine nach Anspruch 6, **dadurch gekennzeichnet, daß** das gesteuert absenkbare und anhebbare Gestänge aus wenigstens 2 parallelen Führungslenkern (24, 25) besteht, die mittels eines Stelltriebes schwenkbar sind.

8. Rotierende Füllmaschine nach Anspruch 7, **dadurch gekennzeichnet, daß** der Stelltrieb aus einem am Laufwagen (22) angeordneten Kurbeltrieb (23) besteht, dessen Kurbelstange an einem der Führungslenker (24) oder (25) angelenkt ist.

9. Rotierende Füllmaschinen nach einem oder mehreren der vorhergehenden Ansprüche 1 - 8, **dadurch gekennzeichnet, daß** an der Führung (16) eine Zahnstange (28) befestigt ist, die mit einem von einem an dem Laufwagen (22) aufgehängten Servomotor (13) antreibbaren Ritzel (29) in Eingriff steht.

10. Rotierende Füllmaschine nach einem oder mehreren der vorhergehenden Ansprüche 1-9, **dadurch gekennzeichnet, daß** jedem Füllrohr (12) ein radial zum Rotor (11) bewegbarer Sackstuhl (34) zugeordnet ist, auf den sich der Ventilsack (14) während des Füllens und des Verschließvorganges des Ventiles abstützt.

11. Rotierende Füllmaschine nach einem oder mehreren der vorhergehenden Ansprüchen 1 -10, **dadurch gekennzeichnet, daß** die Führung (16) aus zwei konzentrisch zum Rotor (11) in unterschiedlichen Abständen und höhengleich angeordneten Profilschienen (16 a) und (16 b) gebildet ist.

## Claims

1. Filling machine for filling valve bags, which is equipped with a rotor (11), which is rotationally drivable at constant rotational speed by means of a rotary drive and which is equipped with several filling pipes (12), onto which the valve bags (14) to be filled can be plugged preferably by means of a socket and which after the plugging on and until dropping onto a delivery conveyor (15) are supported on a bag stool (34) mounted at the rotor (11), characterised by at least one valve closing device (19) which is movable on a guide (16) extending concentrically with the rotor (11) and which for closure of the valve of the filled valve bag (14) removed from the filling pipe (12) is movable synchronously with the rotor (11) at least over a defined angular range.

2. Rotating filling machine according to claim 1, characterised in that the guide (16) is arranged at the stationary part of the rotating filling machine (10) and extends over a predetermined angle and that the valve closing device (19) is movable in and counter to the rotational direction of the rotor (11).

3. Rotating filling machine according to claim 1, characterised in that the guide (16) is fixedly arranged at the rotor (11) for movement therewith and that the valve closing device (19) is movable in and counter to the rotational direction of the rotor (11).

4. Rotating filling machine according to one or more of the preceding claims 1 to 3, characterised in that the drive for the closing device (19) is designed in such a manner that the speed of the movement counter to the rotational direction of the rotor (11) is increased relative to the speed in the direction of running of the rotor (11).

5. Rotating filling machine according to one or more of the preceding claims 1 to 4, characterised in that each filling pipe (12) is associated with a sensor (36), preferably a contactlessly operable sensor, for positioning the valve bag (14), which is to be removed from the filling pipe (12), before closing of its valve.

6. Rotating filling machine according to one or more of the preceding claims 1 to 5, characterised in that each valve closing device (19) is suspended at a controllably lowerable and raisable rod and that the rod is pivoted to a carriage (22) movable in the guide (16).

7. Rotating filling machine according to claim 6, characterised in that the controllably lowerable and raisable rod consists of at least two parallel guide links (24, 25) which are pivotable by means of a setting drive.

8. Rotating filling machine according to claim 7, characterised in that the setting drive consists of a crank drive (23) which is arranged at the carriage (22) and the crank rod of which is pivoted to one of the guide links (24 or 25).

9. Rotating filling machine according to one or more of the preceding claims 1 to 8, characterised in that a rack (28), which stands in engagement with a pinion (29) drivable by a servomotor (13) suspended at the carriage (22), is fastened to the guide (16).

10. Rotating filling machine according to one or more of the preceding claims 1 to 9, characterised in that each filling pipe (12) is associated with a bag stool (34) which is movable radially relative to the rotor (11) and on which the valve bag (14) is supported during the filling and the closing process of the valve.

11. Rotating filling machine according to one or more of the preceding claims 1 to 10, characterised in that the guide (16) is formed by two profile rails (16a and 16b) arranged concentrically with the rotor (11 ) at different spacings and at the same height.

## Revendications

1. Machine de remplissage pour remplir des sacs à valve, qui est équipée d'un rotor (11), lequel peut être entraîné en rotation à vitesse constante, au moyen d'un dispositif d'entraînement, et est équipé de plusieurs tubes de remplissage (12) sur lesquels les sacs à valve (14) à remplir peuvent être emboités, de préférence au moyen d'un dispositif d'emboîtement et qui, après emboitement jusqu'à l'éjection sur un transporteur d'évacuation (15), reposent sur des supports de sacs (34) montés sur le rotor (11), caractérisée par au moins un dispositif de fermeture de valve (19), qui est déplaçable à l'extérieur du rotor (11), sur un guide (16) s'étendant concentriquement au rotor (11) et qui, pour la fermeture de la valve du sac à valve (14) rempli et prélevé du tube de remplissage (12), est déplaçable au moins sur une plage angulaire déterminée, de manière synchrone avec le rotor (11).

2. Machine de remplissage rotative selon la revendication 1, caractérisée en ce que le guide (16) est disposé sur la partie stationnaire de la machine de remplissage (10) rotative et s'étend sur un angle donné, et en ce que le dispositif de fermeture de valve (19) est déplaçable dans le sens de rotation du rotor (11) et dans le sens contraire.

3. Machine de remplissage rotative selon la revendication 1, caractérisée en ce que le guide (16) est disposé fixement sur le rotor (11), de manière à tourner avec celui-ci, et en ce que le dispositif de fermeture de valve (19) est déplaçable dans le sens de rotation du rotor (11) et dans le sens contraire.

4. Machine de remplissage rotative selon une ou plusieurs des revendications précédentes 1 à 3, caractérisée en ce que le dispositif d'entrainement du dispositif de fermeture (19) est conçu de manière que la vitesse du déplacement dans le sens contraire au sens de rotation du rotor (11) soit supérieure à la vitesse dans le sens de rotation du rotor (11).

5. Machine de remplissage rotative selon une ou plusieurs des revendications précédentes 1 à 4, caractérisée en ce qu'à chaque tube de remplissage (12) est associé un palpeur (36), de préférence un palpeur statique, pour le positionnement du sac à valve (14), prélevé du tube de remplissage (12), avant fermeture de sa valve.

6. Machine de remplissage rotative selon une ou plusieurs des revendications précédentes 1 à 5, caractérisée en ce que chaque dispositif de fermeture de valve (19) est accroché à une tringlerie qui peut être abaissée et relevée de manière commandée, et en ce que la tringlerie est articulée à un chariot (22) déplaçable dans la guide (16).

7. Machine de remplissage rotative selon la revendication 6, caractérisée en ce que la tringlerie qui peut être abaissée et relevée de manière commandée est constituée d'au moins deux bras de guidage (24, 25) parallèles qui peuvent pivoter au moyen d'un mécanisme de positionnement.

8. Machine de remplissage rotative selon la revendication 7, caractérisée en ce que le mécanisme de positionnement est constitué d'un mécanisme à manivelle (23) qui est disposé sur le chariot (22) et dont la tige de manivelle est articulée à l'un des bras de guidage (24) ou (25).

9. Machine de remplissage rotative selon une ou plusieurs des revendications précédentes 1 à 8, caractérisée en ce que sur le guide (16) est fixée une crémaillère (28) qui est en prise avec un pignon (29) qui peut être entraîné par un servomoteur (13) suspendu au chariot (22).

10. Machine de remplissage rotative selon une ou plusieurs des revendications précédentes 1 à 9, caractérisée en ce qu'à chaque tube de remplissage (12) est associé un support de sac (34) déplaçable radialement par rapport au rotor (11) et sur lequel le sac à valve (14) prend appui pendant le remplissage et l'opération de fermeture de la valve.

11. Machine de remplissage rotative selon une ou plusieurs des revendications précédentes 1 à 10, caractérisée en ce que le guide (16) est constitué de deux rails profilés (16a) et (16b) disposés concentriquement par rapport au rotor (11), à des distances différentes et à même hauteur.
